(19) Europäisches Patentamt
European Patent Office
Office européen des brevets

(11) **EP 3 710 693 B1**

(12) **FASCICULE DE BREVET EUROPEEN**

(45) Date de publication et mention de la délivrance du brevet:
**26.01.2022 Bulletin 2022/04**

(21) Numéro de dépôt: **18819190.2**

(22) Date de dépôt: **15.11.2018**

(51) Classification Internationale des Brevets (IPC):
**F03D 7/02** $^{(2006.01)}$   **F03D 13/35** $^{(2016.01)}$

(52) Classification Coopérative des Brevets (CPC):
**F03D 7/0296; F03D 13/35;** F05B 2260/96;
Y02E 10/72

(86) Numéro de dépôt international:
**PCT/FR2018/052849**

(87) Numéro de publication internationale:
**WO 2019/097167 (23.05.2019 Gazette 2019/21)**

(54) **SYSTÈME ET PROCÉDÉ DE DIAGNOSTIC D'UN DÉSÉQUILIBRE ROTOR D'UNE ÉOLIENNE**

SYSTEM UND VERFAHREN ZUR DIAGNOSE EINER ROTORUNWUCHT EINER WINDTURBINE

SYSTEM AND METHOD FOR DIAGNOSING A ROTOR UNBALANCE OF A WIND TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2017 FR 1760715**

(43) Date de publication de la demande:
**23.09.2020 Bulletin 2020/39**

(73) Titulaire: **Sereema**
**34960 Montpellier (FR)**

(72) Inventeurs:
• **IMBERT, Jérôme**
 **34280 La Grande Motte (FR)**
• **PINTO, Bruno**
 **34070 Montpellier (FR)**
• **MICHEL, Kevin**
 **34000 Montpellier (FR)**

(74) Mandataire: **Rhein, Alain**
**Cabinet BREV & SUD**
**55 Avenue Clément Ader**
**34170 Castelnau-le-Lez (FR)**

(56) Documents cités:
EP-A1- 1 719 910    EP-A1- 2 472 238
WO-A1-2016/169963    WO-A1-2018/171852
WO-A2-2009/000787    US-A1- 2012 183 399

EP 3 710 693 B1

**Description**

La présente invention entre dans le domaine du développement durable, des énergies renouvelables et plus particulièrement de l'énergie éolienne. En effet, l'invention concerne un système de diagnostic d'un déséquilibre rotor d'une éolienne.

Dans le cadre du développement des énergies renouvelables, de nombreux parcs éoliens se sont implantés rapidement. Les exploitants de ces parcs ont dû mettre en place des solutions d'entretien et de surveillance de l'état de fonctionnement de chacune des éoliennes qui composent leur parc, Ainsi, l'état de fonctionnement de chaque éolienne est une donnée primordiale pour optimiser la production d'énergie et prévenir tout risque de dommage.

Dans ce contexte, il est connu que le déséquilibre rotor d'une éolienne peut être une source d'informations quant à l'usure des pales, l'état physique des pales ou de leur état d'assemblage. Ainsi, des solutions techniques ont donc été développées afin d'optimiser le fonctionnement d'une éolienne,

Une première solution décrite par le document US 2012/0183399  consiste en un système d'équilibrage du rotor et des pales d'une éolienne, A cet effet, le système d'équilibrage utilise un dispositif de mesure qui comporte un capteur de vibration et un capteur de la vitesse de rotation du rotor de type capteur électromagnétique. Au travers notamment d'un procédé de mesure du déséquilibre à N configurations différentes de tangage des pales suivi, d'une part, d'une étape de calcul pour estimer la correction nécessaire de tangage des pales, et d'autre part, d'une étape de correction du tangage des pales. Le système d'équilibrage corrige le déséquilibre rotor identifié lors des phases de rotation du rotor. Il est à noter que le tangage d'une pale correspond à son angle d'inclinaison par rapport à un zéro de référence au niveau du moyeu du rotor.

Dans le but de corriger le déséquilibre rotor, le système d'équilibrage utilise les données d'accélération de la nacelle mesurées par le capteur de vibration, las données da vitesse de rotation des pales mesurées par le capteur de vitesse de rotation du rotor et le tangage connu des pales.

Selon le type d'éolienne, un tel système d'équilibrage implique une modification des réglages de l'éolienne pour réaliser des mesuras à N configurations de tangage des pales. De tels changements de configuration de tangage peuvent entrainer une baisse de production énergétique. De plus, le déséquilibre rotor est mesuré sur des périodes de fonctionnement courtes qui sont peu représentatives des différentes conditions de fonctionnement d'une éolienne. Par exemple, selon des conditions météorologiques auxquelles est soumise une éolienne, telles que l'orientation et la force du vent, la température, la pluie, la neige, le givre etc. Dans ce contexte, des mesures sur une courte période ne représentent pas la variabilité des vibrations qui s'appliquent sur le rotor. Ainsi, ce procédé peut nécessiter de nouvelles interventions et augmenter le coût d'entretien de 1-'éclienne.

Une deuxième solution décrite par le document WO 2016/169964 consiste en un système d'équilibrage qui utilise un système de réglage du tangage de chaque pale du rotor et un dispositif de mesure du déséquilibre rotor. Plus particulièrement, le dispositif de mesure comporte un détecteur d'angle adapté à détecter le tangage de chaque pale, un capteur de la vitesse de rotation du rotor et au moins un capteur de vibration de la nacelle. Le système d'équilibrage détermine le déséquilibre du rotor lors de quelques périodes de rotation du rotor, par exemple deux ou trois, chaque rotation étant choisie selon une vitesse de rotation prédéfinie du rotor. Ainsi, le déséquilibre du rotor est déterminé en fonction des données de vibration de la nacelle mesurées par le capteur de vibration et des données de vitesse de rotation du rotor mesurées par le capteur de vitesse de rotation du rotor. Dans une seconde étape, le système d'équilibrage corrige le tangage d'une ou de plusieurs pale(s) de manière à corriger le déséquilibre rotor déterminé. Le système d'équilibrage répète ainsi ces étapes jusqu'à éliminer le déséquilibre rotor. Ce système d'équilibrage présente également l'inconvénient de modifier les réglages de l'éolienne pour réaliser des mesures à N configurations de tangage des pales, De tels changements de configuration de tangage peuvent entrainer une baisse de production énergétique. De plus, le diagnostic est réalisé sur des périodes non représentatives des conditions de fonctionnement d'une éolienne.

Une troisième solution décrite par le document WO 2009/129617 consiste en un système d'équilibrage du déséquilibre rotor d'une éolienne, Dans cet objectif, le système d'équilibrage comporte un dispositif de mesure équipé d'un capteur de vitesse de rotation du rotor et de trois capteurs de vibration qui sont formés par des accéléromètres, De manière ponctuelle, les capteurs sont installés précisément au niveau de la nacelle afin de mesurer des vibrations selon l'axe de rotation du rotor et selon deux axes parallèles l'un à l'autre et perpendiculaires à l'axe de rotation du rotor.

Une fois le dispositif de mesure installé une batterie de test est effectuée de manière à déterminer les deux composantes du déséquilibre rotor d'une éolienne à savoir le déséquilibre aérodynamique du rotor et le déséquilibre massique du rotor.

Afin de déterminer le déséquilibre aérodynamique du rotor, des mesures de données d' accélération sont réalisées pendant une période de fonctionnement de l'éolienne. Les données d'accélération qui correspondent aux vibrations de torsion de la nacelle et aux vibrations axiales sont comparées avec des données de référence issues d'un cycle de rotation de référence. Lorsque les données d'accélération dépassent un certain seuil cela signifie que le rotor présente un déséquilibre aérodynamique. Pour détecter la source du problème, une inspection visuelle et/ou un réalignement des pales sont réalisés.

En outre, le déséquilibre massique est déterminé via des mesures de données d'accélération réalisées pendant une période de fonctionnement de l'éolienne au cours de laquelle une masse est arrimée à une pale. Comme les deux premières solutions citées de l'état de l'art, ce troisième système d'équilibrage nécessite un arrêt de la production d'énergie pour déterminer le déséquilibre rotor et le corriger. En outre, le déséquilibre rotor est également mesuré sur une période courte qui est peu représentative des conditions de fonctionnement d'une éolienne.

Dans ce conteste, la demanderesse a développé un système de diagnostic du déséquilibre du rotor alternatif et innovant. Au travers de mesures et d'analyses de données d'accélération continues et systématiques pendant des périodes de fonctionnement significatives de l'éolienne, le système de diagnostic permet d'obtenir des données fiables sans interrompre la production d'énergie et sans modifier les réglages de l'éolienne.

A cet effet, un premier aspect de l'invention porte sur un système de diagnostic d'un déséquilibre rotor d'une éolienne à partir de données d'accélération mesurées au niveau d'une nacelle de l'éolienne qui est supportés par une tour, caractérisé en ce qu'il comporte :

- un dispositif de mesure équipé d'un capteur de vibration trois axes X, Y, Z qui effectue des mesures systématiques et continues des données d'accélération correspondant aux phénomènes etvibratoires se produisant au niveau de la

- Un système de traitement des données d'accélération adapté à déterminer le déséquilibre du rotor au travers d'une analyse vibratoire qui se base uniquement sur les données d'accélération mesurées sur au moins deux axes X, Y, Z au niveau de la nacelle sans intervenir sur le fonctionnement normal de l'éolienne.

Le système de diagnostic de l'invention permet de déterminer un déséquilibre rotor au travers d'une analyse vibratoire qui se base uniquement sur des masures de données d'accélération qui correspondent aux phénomènes vibratoires se produisant au niveau de la nacelle. Avantageusement, le système selon l'invention permet de déterminer le déséquilibre rotor de l'éolienne sans modifier les réglages de fonctionnement de l'éolienne tels que l'angle de tangage du rotor. Contrairement à l'état de l'art cité dans la demande, le système de diagnostic selon l'invention fournit à un exploitant de parc éolien un diagnostic de son parc sans avoir la nécessité de stopper chaque éolienne afin d'effectuer un protocole de tests itératifs visant à déterminer le déséquilibre rotor de chaque éolienne, Ce qui représente un gain de productivité pour l'exploitant du parc et une réduction des coûts pour obtenir un diagnostic.

Selon une première caractéristique du premier aspect de l'invention, le système de traitement comprend un module d'analyse qui analyse on continue des données d'accélération mesurées par le dispositif de mesure afin de déterminer une période de fonctionnement. Tf de l'éolienne, le déséquilibre rotor étant déterminé au cours d'une pluralité de périodes de fonctionnement Tf stable de l'éolienne qui est définie par une fréquence 3P stable de passage des pales devant la tour.

Plus précisément, le module d'analyse détermine une période de fonctionnement Tf lorsqu'il identifie des vibrations V3P dues au passage d'une pale devant la tour selon au moins un axe X, Y, Z. Selon l'invention le module d'analyse réalise des opérations d'analyse systématiques en continu des phénomènes vibratoires mesurés et permet de déterminer si l'éolienne est dans une période de fonctionnement en identifiant les vibrations V3P.

Selon une particularité de la première caractéristique du premier aspect de l'invention, le module d'analyse identifie les vibrations V3P après une opération de raffinage des données d'accélération mesurées. Plus particulièrement, l'opération de raffinage comporte :

- une étape de projection des données d'accélération collectées dans un repère tridimensionnel X", Y", Z" du rotor ;

- une étape de formation d'un spectre fréquentiel des données d'accélération projetées dans le repère tridimensionnel X", Y", Z" du rotor ;

- une étape de suréchantillonage du spectre fréquentiel ; et

- une étape de sélection de pics correspondant aux vibrations V3P qui est réalisée par le produit de chaque pic du spectre fréquentiel suréchantillonnéavec le pic d'au moins les cinq premières harmoniques dudit pic.

Selon une deuxième caractéristique du premier aspect de l'invention, le système de traitement comporte un module de périodicité qui est adapté à déterminer et enregistrer une période de rotation Tr régulière du rotor qui correspond à une pluralité de périodes de fonctionnement Tf stable de l'éolienne. Cette pluralité de périodes de fonctionnement Tf stable est déterminée en fonction des vibrations V3P identifiées.

A cet effet, le module de périodicité balaye les vibrations V3P identifiées au cours d'une période de fonctionnement Tf de manière à détecter au moins une vibration V3P dont la fréquence est voisine d'une fréquence 3P de référence de l'éolienne. Ainsi, lorsque que le module de périodicité détecte au moins une vibration V3P dont la fréquence est voisine de la valeur de la fréquence 3P théorique de l'éolienne, le module de périodicité présélectionne la période de fonctionnement Tf.

Dans ce contexte, lorsque le module de périodicité sélectionne un nombre seuil NS de périodes de fonctionnement Tf qui se succèdent chronologiquement, le module de périodicité enregistre une période de rotation Tr régulière du rotor,

Selon une troisième caractéristique du premier aspect de l'invention, le système de traitement comprend un module de traitement fréquentiel adapté à quantifier selon au moins deux axes X", Y", Z" des vibrations V1P de la nacelle dues à un déséquilibre du rotor au cours d'une pluralité de périodes de fonctionnement Tf stable de l'éolienne. Plus spécifiquement, le module fréquentiel quantifie les vibrations V1P de la nacelle au cours d'une pluralité de périodes de fonctionnement Tf stable de l'éolienne correspondant à une période de rotation Tr régulière enregistrée.

A ces fins, le module de traitement fréquentiel quantifie des vibrations V1P dont la fréquence est voisine d'une fréquence 1P de référence de l'éolienne.

Selon une quatrième caractéristique du premier aspect de l'invention, le système de traitement comprend un module de calcul adapté à déterminer le déséquilibre du rotor en fonction des vibrations V1P selon au moins deux axes X", Y", Z", qui ont été quantifiées au cours d' une pluralité de périodes de fonctionnement Tf stable de l'éolienne. De préférence, les vibrations V1P sont quantifiées au cours d'un nombre déterminé Nd de périodes de rotation Tr régulières enregistrées.

Avantageusement, le traitement des données d'accélération mesurées sur une pluralité de périodes de fonctionnement stable de l'éolienne, c'est-à-dire, des périodes où le rotor tourne à vitesse régulière, permet de déterminer un déséquilibre rotor sur un grand nombre de périodes de fonctionnement et ainsi d'augmenter la précision du diagnostic. En effet, le traitement de grand nombre de périodes de fonctionnement permet de réduire l'impact des variations des phénomènes vibratoires mesurés dues aux conditions externes auxquelles est soumise l'éolienne. Le traitement des données sur une pluralité de périodes de fonctionnement stable contribue également à déterminer le déséquilibre rotor de l'éolienne sans avoir la nécessité de modifier les réglages de fonctionnement de l'éolienne.

Le système de diagnostic selon l'invention permet de déterminer le déséquilibre rotor en se basant uniquement sur des données d'accélération qui peuvent être mesurées sans stopper la production d'énergie et sans intervenir sur l'éolienne et ses réglages,

Le module de calcul détermine, en fonction des vibrations V1P selon au moins deux axes X", Y", Z" , un déséquilibre aérodynamique du rotor et un déséquilibre massique du rotor qui forment le déséquilibre rotor.

Avantageusement, le système de diagnostic réalise un traitement simultané des données d' accélération V1P selon au moins deux axes permettant de déterminer simultanément les déséquilibres aérodynamique et massique du rotor.

Selon une particularité des quatre précédentes caractéristiques du premier aspect de l'invention, le module d'analyse, le module de périodicité, le module de traitement fréquentiel et le module de calcul sont des algorithmes adaptés à être exécutés par au moins un terminal informatique.

Selon une cinquième caractéristique du premier aspect de l'invention, le dispositif de mesure est disposé sur un axe parallèle à l'axe longitudinal de la nacelle. Ce positionnement du dispositif de mesure rend possible la projection des données d'accélération dans le repère tridimensionnel du rotor.

Un deuxième aspect de l' invention concerne un procédé de diagnostic d'un déséquilibre rotor d'une éolienne à partir de données d' accélération mesurées au niveau d' une nacelle d'éolienne qui est supportée par une tour, caractérisé en ce qu'il comporte :

-  une étape de mesure systématique et continue selon trois axes X, Y, Z de données d'accélération correspondant aux phénomènes vibratoires se produisant au niveau de la nacelle ; et

-  une étape de traitement des données d'accélération de manière à déterminer le déséquilibre du rotor au travers d' une analyse vibratoire qui se base uniquement sur les données d'accélération mesurées sur au moins deux axes X, Y, Z au niveau de la nacelle sans intervenir dans le fonctionnement normal de l'éolienne.

Selon une première caractéristique du deuxième aspect de l'invention, l'étape de traitement des données d'accélération comprend :

-  une opération d' analyse en continue des données d'accélération afin de déterminer une période de fonctionnement Tf stable de l'éolienne, et

-  une opération de détermination d'une pluralité de périodes de fonctionnement Tf stable de l'éolienne, le déséquilibre rotor étant déterminé au cours de cette pluralité de périodes de fonctionnement Tf stable de l'éolienne qui est définie par une fréquence 3P stable de passage des pales devant la tour.

En particulier, une période de fonctionnement Tf est déterminée lorsque des vibrations V3P dues au passage d'une pale devant la tour selon au moins un axe X, Y, Z sont identifiées.

D'autres particularités et avantages apparaitront dans la description détaillée qui suit, d'un exemple de réalisation non limitatif de l'invention, qui est illustré par les figures 1 à 9 placées en annexe et dans lesquelles :

- la figure 1 est une représentation schématique d'un système de diagnostic du déséquilibre rotor d'une éolienne qui est conforme à un exemple de réalisation de l'invention ;

- la figure 2 est une représentation d'un signal vibratoire brut de données d' accélération ;

- la figure 3 est représentation simplifiée d'un spectre fréquentiel suréchantillonné de données d'accélération.

- la figure 4 est une représentation simplifiée d'un spectre fréquentiel transformé ;

- la figure 5 est une représentation d'un histogramme correspondant à une distribution des vibrations axiales quantifiées du rotor pour lequel un ajustement de type Weibull a été réalisé ;

- la figure 6 est une représentation d'un histogramme correspondant à une distribution des vibrations transversales quantifiées du rotor pour lequel un ajustement de type Gaussien a été réalisé ;

- la figure 7 est une représentation graphique d'un facteur de correction axial ;

- la figure 8 est une représentation graphique d'une courbe de distribution du déséquilibre aérodynamique du rotor ; et

- la figure 9 est une représentation schématique d'un procédé de diagnostic du déséquilibre rotor d'une éolienne effectué par le système de diagnostic de la figure 1,

L'invention concerne un système de diagnostic 1 d'un déséquilibre rotor d'une éolienne.

De manière générale, une éolienne se compose d'une tour qui est ancrée au sol ou à des fonds marins. La tour supporte une nacelle au niveau de laquelle est ménagé le rotor. Le rotor s'étend selon un axe longitudinal qui se confond avec son axe de rotation X" et présente un angle de tangage par rapport à l'axe longitudinal X' de la nacelle. De manière générale, l'angle de tangage de l'axe de rotation X" du rotor est de S°. Ici, et dans la plupart des cas, le rotor comprend trois pales.

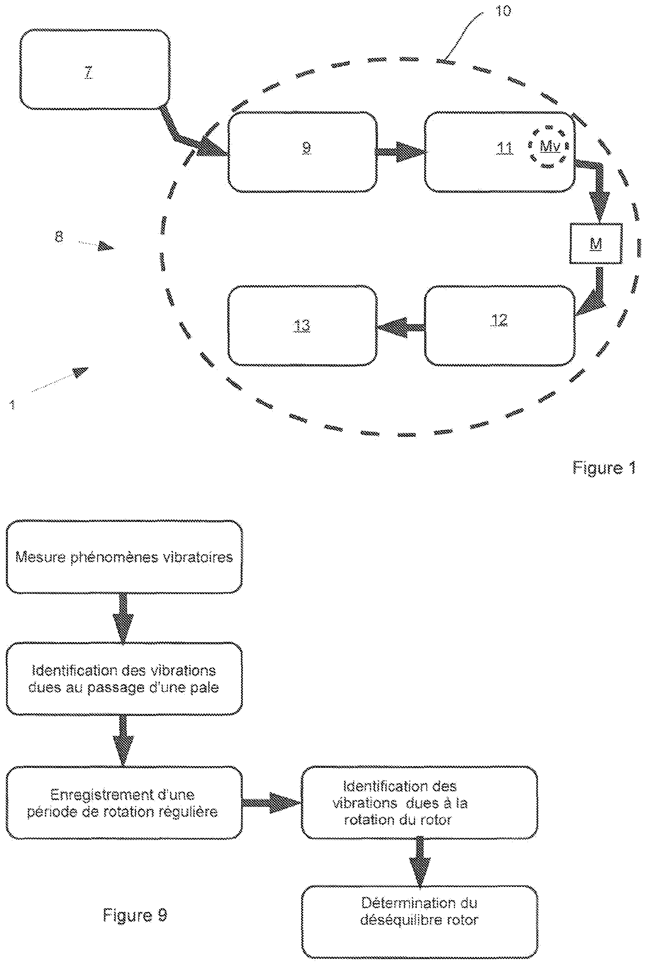

Comme illustré aux figures 1 et 9, le système de diagnostic 1 permet, au travers d'un procédé de diagnostic, de déterminer le déséquilibre rotor à partir de données d'accélération mesurées au niveau de la nacelle de l'éolienne, Les données d'accélération correspondent à des phénomènes vibratoires que subit la nacelle au cours du fonctionnement de l'éolienne. Les origines d'un phénomène vibratoire peuvent être multiples et dépendre des conditions météorologiques, de perturbations induites par la rotation du rotor, ou encore de perturbations induites par le passage d'une pale devant la tour etc.

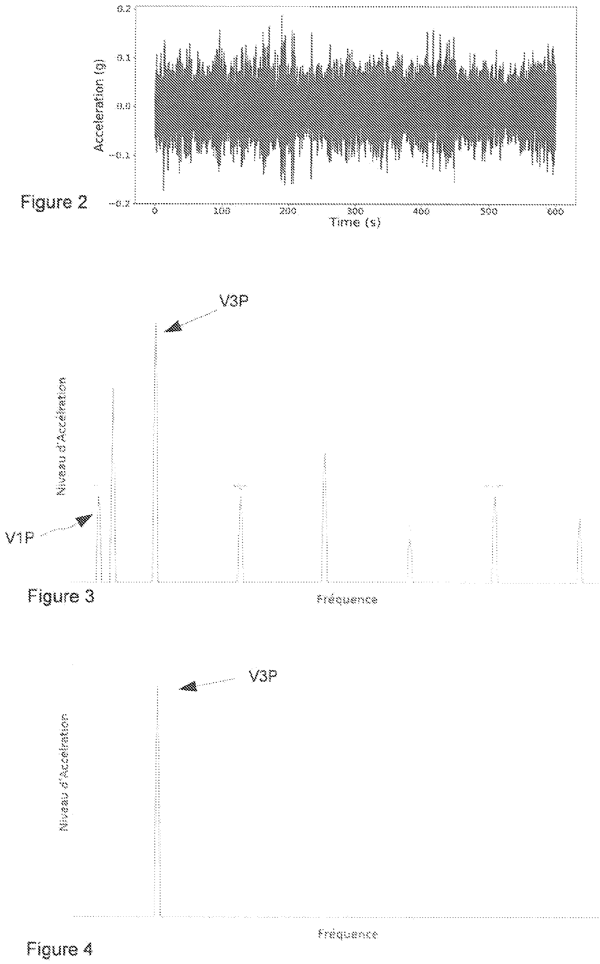

Comme illustré à la figure 1, afin de mesurer les vibrations subites par la nacelle, le système de diagnostic 1 comporte un dispositif de mesure 7 qui est équipé d'un capteur de vibration présentant trois axes de mesure X, Y, Z, Le capteur de vibration permet de mesurer des données d'accélération qui correspondent à des phénomènes vibratoires. Les données d'accélération mesurées peuvent être représentées sous la forme d'un signal vibratoire brut tel qu'illustré à la figure 2. Ici, le capteur de vibration est formé par un accéléromètre à trois axes de masure X, Y, Z.

Le dispositif de mesure 7 est positionné sur la nacelle afin qu'un des axes de rassure X, Y, Z du capteur de vibration soit positionné de manière parallèle à l'axe longitudinal X'. Ici, l'axe de mesure X est positionné de manière parallèle à l'axe longitudinal X', De préférence, le dispositif de mesure 7 est solidarisé de manière rigide à un mât météo de l'éolienne.

Une fois positionné, le dispositif de mesure 7 est mis en fonctionnement et effectue une opération de mesure systématique et continue des données d'accélération, selon les trois axes de mesure X, Y, Z,

Le dispositif de mesure 7 est adapté à transférer, les données d'accélération mesurées au niveau de la nacelle, vers un système de traitement 8 qui est adapté à déterminer le déséquilibre rotor à partir des données d'accélération mesurées sur au moins deux axes (X", Y", Z").

Dans l'exemple illustré à la figure 1, le système de traitement 8 comporte un module d'analyse 9 qui reçoit les données d'accélération transférées par le dispositif de mesure 7.

En outre, le dispositif de mesure 7 peut comporter une mémoire lui permettant de stocker les données collectées localement,

Ici, le module d'analyse 9 est un algorithme stocké et exécuté par un terminal informatique 10 qui peut être embarqué au niveau de l'éolienne ou être situé à distance de l'éolienne.

Dans le cas où le terminal informatique 10 est situé à distance de l'éolienne, le dispositif de mesure 7 comporte des moyens de transmission au travers d'un réseau de télécommunication, tel qu'un réseau GSM ou satellite.

Afin de limiter les interventions au niveau de la nacelle de l'éolienne, le dispositif de mesure 7 est alimenté en énergie électrique par une batterie ou par l'éolienne.

Plus précisément, le module d'analyse 9 est intégré au système de diagnostic 1, et est adapté à analyser en continu les données d'accélération transmises par le dispositif de mesure 7 de manière à déterminer une période de fonctionnement Tf de l'éolienne. De préférence, la période de fonctionnement Tf est comprise entre 15 secondes et 90 secondes et de préférence la période de fonctionnement Tf est comprise entre 20 et 60 secondes,

Une période de fonctionnement Tf est déterminée lorsque que le module d'analyse 9 identifie des vibrations V3P de la nacelle, selon au moins un axe X, Y, Z, qui sont induites par le passage d'une pale devant la tour,

Dans cet objectif, le module d'analyse 9 effectue un procédé de raffinage des données d'accélération qui permet d'obtenir un spectre fréquentiel tel qu'illustré à la figure 3. Le spectre fréquentiel de la figure 3 comporte, d'une part, en abscisse la fréquence de la vibration mesurée, et d'autre part, en ordonnée, le niveau d'accélération du signal vibratoire qui correspond à l'intensité de la vibration mesurée.

Le procédé de raffinage des données d'accélération mesurées permet de mettre en exergue, en fonction de leur niveau d'accélération et de leur fréquence, les vibrations V3P de la nacelle, qui correspondent aux vibrations induites par la passage d'une pale devant la tour de l'éolienne,

A cet effet, le procédé de raffinage utilise une succession d'opérations de traitement de manière à améliorer la lisibilité du spectre fréquentiel en ne laissant subsister que les vibrations V3P correspondant au passage d'une pale devant la tour. Dans l'exemple de la figure 4, seul un pic subsiste, il correspond à une vibration V3P de la nacelle.

Dans cette optique, le procédé de raffinage comporte une première opération de projection des données d'accélération dans un repère tridimensionnel X', Y', Z' de la nacelle, Le vecteur de gravité G qui est considéré comme relativement constant par nature et correspond à l'axe Z' de la nacelle.

En outre, le vecteur de gravité G est utilisé comme référence pour projeter, au travers d'une première matrice de rotation, les données d'accélération X, Y, Z dans le repère tridimensionnel X' ,Y' ,Z' de la nacelle,

Quelque soit l'inclinaison du dispositif de mesure 7 la projection des données d'accélération dans le repère X', Y', Z' permet de faire correspondre l'axe Z' avec le vecteur da gravité G.

Le procédé de raffinage comporte une seconde opération de projection qui utilise une seconde matrice de rotation pour projeter les données d'accélération depuis le repère tridimensionnel X', Y', Z' de la nacelle vers un repère tridimensionnel X", Y", Z" du rotor. Comme indiqué précédemment, le rotor présente un angle de tangage par rapport à la nacelle, cette seconds projection dans le repère tridimensionnel X", Y", Z" permet de projeter les données d'accélération dans le plan du rotor.

Les deux opérations de projection des données d'accélération permettent, d'une part, de limiter les contraintes de positionnement du dispositif de mesure 7, et d'autre part, de projeter les données d'accélération dans le repère tridimensionnel X", Y", Z" du rotor sur lequal les efforts du déséquilibre rotor se répercutent.

Le procédé de raffinage comporte une opération de formation d'un spectre fréquentiel des données d'accélération projetées dans le repère tridimensionnel X", Y", Z" du rotor. Typiquement, l'opération de formation du spectre fréquentiel peut être réalisée à l'aide d'une transformée de fourrier.

Afin d'améliorer la résolution du spectre fréquentiel le procédé de raffinage comporte une étape de suréchantillonage du spectre fréquentiel. Cette étape de suréchantillonage contribue à améliorer la précision de l'identification des pies et/ou signaux correspondant aux vibrations V3P (illustré à la figure 3).

Le procédé de raffinage comporte une opération d'identification de signaux correspondant aux vibrations V3P de la nacelle, Afin d'effectuer cette opération, le module d'analyse 9 génère un spectre fréquential transformé en réalisant le produit de chaque pic et/ou signal du spectre fréquentiel suréchantillonné avec le pic et/ou signal d'au moins les cinq premières harmoniques dudit pic st/ou signal.

En effet, seules les vibrations induites par le passage d'une pale devant la tour excitent la fréquence de vibration fondamentale et au moins cinq de ses premières harmoniques sur l'axe X", Ainsi, le produit de chaque pic et/ou signal du spectre fréquentiel suréchantillonné avec le pic et/ou signal d'au moins les cinq premières harmoniques du spectre fréquentiel suréchantillonné permet de ne faire subsister que les vibrations V3P correspondant au passage d'une pale devant la tour.

Le module d'analyse 9 identifie la fondamentale des vibrations V3P par une sélection de pics significatifs par rapport au bruit du spectre fréquentiel transformé illustré à la figure 4. En pratique, chaque pic significatif correspond à une vibration V3P et la sélection de pics significatifs peut être réalisée sur une plage fréquentielle prédéterminée qui dépend des données constructeurs de l'éolienne, Par exemple, le module d'analyse 9 peut être paramétré pour sélectionner des pics significatifs lorsqu'ils se trouvent dans une plage fréquantielle comprise entre 0,1 Hz et 2 Hz.

Au travers du procédé de raffinage le module d'analyse 9 permet de déterminer une fréquence 3P du rotor par extraction de la fondamentale des vibrations V3P des données d'accélération mesurées par le dispositif de mesure 7.

La fréquence 3P du rotor correspond à la fréquence de passage d'une pale devant la tour.

Comme illustré à la figure 1, le système de traitement 8 comporte un module de périodicité 11 qui est adapté à enregistrer dans une mémoire M du terminal informatique 10 une période Tr de rotation régulière du rotor en fonction des vibrations V3P identifiées. La mémoire M du terminal informatique 10 peut être constituée par un disque dur ou une mémoire flash.

Dans le présent exemple, le module de périodicité 11 est un algorithme stocké et exécuté par le terminal informatique 10.

Au travers d'un procédé d'analyse des vibrations V3P identifiées sur un spectre fréquentiel transformé de périodes de fonctionnement Tf qui se succèdent, le module de périodicité 11 crée et enregistre une période Tr dans la mémoire M du terminal informatique 10.

A cet effet, le procédé d'analyse effectué par le module de périodicité 11 comporte une opération de balayage des vibrations V3P identifiées sur le spectre fréquentiel transformé d'une période de fonctionnement Tf. Lors de l'opération de balayage, le module de périodicité 11 compare la fréquence des vibrations V3P identifiées avec une fréquence 3P de référence de l'éolienne.

Ici, la fréquence 3P de référence de l'éolienne correspond à une fréquence 3P théorique qui dépend du type d'éolienne et relève d'une donnée constructeur connue. La fréquence 3P théorique correspond, par exemple, à la valeur de la fréquence 3P pendant un fonctionnement nominal du rotor. où les efforts causés par le déséquilibre du rotor s'exercent sur le rotor de manière maximale.

Lorsque le module de périodicité 11 détecte sur le spectre fréquentiel transformé d'une période de fonctionnement Tf, au moins une vibration V3P dont la fréquence est voisine de la fréquence 3P de référence de l'éolienne, le module de périodicité 11 réalise une opération de présélection de ladite période de fonctionnement Tf. En pratique, ladite période de fonctionnement Tf préséisictionnée est stockée de manière temporaire et/ou permanente dans une mémoire Mv du module de périodicité 11.

La mémoire Mv du module de périodicité 11 peut être constituée par une mémoire vive, un disque dur ou encore une mémoire flash. Lorsque le module de périodicité 11 présélectionne un nombre seuil NS de période de fonctionnement Tf qui se succèdent chronologiquement, le module de périodicité 11 réalise une opération d'assemblage du nombre seuil NS des périodes de fonctionnement Tf successives pour créer une période de rotation Tr régulière du rotor.

Dans le présent exemple, le nombre seuil NS de périodes de fonctionnement Tf présélectionnées nécessaire pour créer une période de rotation Tr régulière peut être compris entre 5 et 30 périodes de fonctionnement Tf présélectionnées et de préférence antre 10 et 20 périodes de fonctionnement Tf présélectionnées.

Ici, chaque période de rotation Tr régulière déterminée via une analyse vibratoire correspond à une période de 2 à 15 minutes au cours de laquelle le rotor tourne à une vitesse régulière.

Dans cet exemple, le module de périodicité 11 enregistre chaque période Tr dans la mémoire M du terminal informatique 10.

En outre, dans l'exemple de la figure 1, le système de traitement 8 du système de diagnostic 1 comporte un module de traitement fréquentiel 12 adapté à déterminer des vibrations V1P de la nacelle qui sont induites par le déséquilibre du rotor.

Dans le présent exemple, le module de traitement fréquentiel 12 est un algorithme stocké et exécuté par le terminal informatique 10.

Au travers d'un procédé de traitement fréquentiel d'une période de rotation Tr régulière enregistrée dans la mémoire M, le module de traitement fréquentiel 12 détermine des vibrations V1P dont la fréquence est voisine d'une fréquence 1P de référence de l'éolienne.

La fréquence 1P correspond à la vitesse de rotation du rotor. Lorsque la vitesse de rotation du rotor est stable, la fréquence 1P est également stable.

Par ailleurs, dans cet exemple, la fréquence 1P de référence de l'éolienne correspond à une fréquence 1P théorique qui dépend du type d'éolienne et relève d'uns donnée constructeur connue. La fréquence 1P théorique correspond, par exemple, à la valeur de la fréquence 1P pendant un fonctionnement nominal du rotor au cours duquel les efforts causés par le déséquilibre du rotor s'exercent sur le rotor de manière maximale,

Le module de traitement fréquentiel 12 quantifie, sur une période de rotation Tr régulière des vibrations V1P dont la valeur est comprise entre -20% et + 20% de la fréquence 1P de référence, de préférence le module de traitement fréquentiel 12 quantifie des vibrations V1P dont la valeur est comprise entre - 15 % et +15 % de la fréquence 1P de référence et de préférence le module de traitement fréquentiel 12 quantifie des vibrations V1P dont la valeur est comprise entre -10 % et +5 % de la fréquence 1P de référence.

Dans cet objectif, le module de traitement fréquentiel 12 réalise une étape de quantification du niveau d'accélération des vibrations V1P axiales et transversales autour de la fréquence 1P de référence, c'est-à-dire, la quantification de l'intensité vibratoire des vibrations V1P axiales, selon l'axe X", et V1P transversales, selon l'axe Y".

Dans l'exemple illustré à la figure 1, le système de traitement 8 du système de diagnostic 1 comporte un module de calcul 13 adapté à déterminer le déséquilibre rotor en fonction des vibrations V1P axiales et V1P transversales d'un nombre déterminé Nd de périodes de rotation Tr régulières enregistrées dans la mémoire M.

Ici, le module de calcul 13 est un algorithme stocké et exécuté par le terminal informatique 10.

Dans cet exemple, le nombre déterminé Nd de périodes de rotation Tr régulières est compris entre 100 et 400, et de préférence le nombre déterminé Nd de périodes de rotation Tr régulières est compris entre 200 et 300.

Afin de déterminer le déséquilibre rotor, le module de calcul 13 réalise des opérations de traitement statistique qui permettent d' obtenir une valeur globale des vibrations VIP axiales et transversales pour le nombre déterminé Nd de périodes de rotation Tr régulières dans la mémoire M. Dans cet exemple, le module de calcul 13 traite de manière indépendante les valeurs globales des vibrations VIP axiales et transversales.

De manière connue, le déséquilibre rotor d'une éolienne comporte deux composantes, un déséquilibre aérodynamique du rotor et un déséquilibre massique du rotor.

Il a été démontré que les vibrations axiales V1P sont principalement résultantes du déséquilibre aérodynamique et. principalement induites par un comportement aérodynamique différent entre chaque pale de l'éolienne. Les vibrations axiales V1P varient avec la force du vent. De plus, le déséquilibre aérodynamique d'un rotor peut être dü à une erreur de montage des pales telle qu'un décalage d'angle de tangage d'une ou plusieurs pale(s), à une déformation des pales qui peut être induite par des impacts de foudre, une usure différenciée des pales, ou encore une différence de fabrication entre chaque pale.

Dans le cas des vibrations transversales V1P, elles résultent principalement d'un déséquilibre massique du rotor et sont principalement induites par la rotation du rotor. Le déséquilibre massique du rotor peut être dû à un problème de fissures d' une pale qui peut favoriser une accumulation d' eau dans cette pale, ou un dépôt de matière sur les pales, par exemple un dépôt de givre.

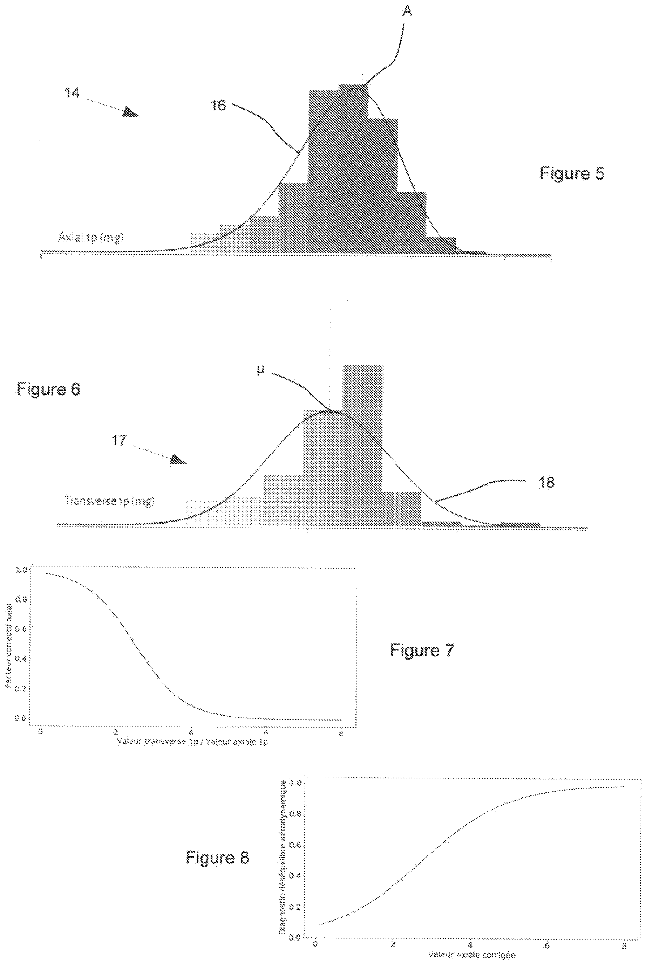

La figure 5 présente une distribution des vibrations V1P axiales pour le nombre déterminé Nd de périodes de rotation Tr régulières selon un premier histogramme 14. L'histogramme 14 présente sur l'axe des abscisses les valeurs d'accélération des vibrations V1P axiales et sur l'axe des ordonnées la proportion et/ou la quantité de vibrations V1P axiales, La distribution est effectuée par le module de calcul 13.

Afin de déterminer une valeur globale des vibrations V1P axiales, il est nécessaire d'interpréter la distribution des vibrations V1P axiales sur l'histogramme 14.

Comme indiqué au préalable, lorsque la vitesse du rotor est constante, la spécificité de la distribution des vibrations V1P axiales est due à différentes vitesses de vent qui s'appliquent sur le rotor et les pales. Pour interpréter un tel phénomène, le module de calcul 13 utilise un modèle statistique tel que la loi de Weibull. Une valeur globale des vibrations V1P axiales est déterminée au travers du calcul du paramètre A de la loi de Weibullqui représente la valeur caractéristique de la distribution des valeurs des vibrations V1P axiales.

Dans l'exemple illustré à la figure 5, le module de calcul 13 ajuste une courbe de Weibull 16 à la distribution des vibrations V1P axiales de manière à déterminer le paramètre A de la courbe de Weibull ajustée.

La figure 6 présente une distribution des vibrations V1P transversales pour le nombre déterminé Nd de périodes de rotation Tr régulières selon un second histogramme 17. L'histogramme 17 présente sur l'axe des abscisses les valeurs d'accélération des vibrations V1P transversales et sur l'axe des ordonnées la proportion et/ou la quantité de vibrations V1P transversales. La distribution est effectuée par le module de calcul 13.

Afin de déterminer une valeur globale des vibrations V1P transversales, il est nécessaire d'interpréter la distribution des vibrations V1P transversales sur 1' histogramme 17.

Comme indiqué préalablement, les vibrations V1P transversales varient principalement avec à la vitesse de rotation du rotor, Or, les périodes de rotation Tr régulières sélectionnées sont caractérisées par une vitesse de rotation constante du rotor. Par voie de faits et comme illustré sur la figure 6, la distribution des vibrations V1P transversales sur l'histogramme 17 présente un profil classique de distribution Gaussienne. Dans ce contexte, une fonction gaussienne constitue un modèle pertinent pour déterminer une valeur globale caractéristique de la distribution des vibrations V1P transversales.

Ainsi, le module de calcul 13 ajuste une courbe Gaussienne 18 sur l'histogramme 17 de distribution des vibrations V1P transversales à l'aide d'une fonction Gaussienne. Dans cet exemple, la valeur globale des vibrations V1P transversales correspond à la valeur moyenne $\mu$ de la courbe Gaussienne 18 ajustée.

En outre, comme cela a été évoqué, le déséquilibre aérodynamique est la principale origine des vibrations axiales V1P. De manière connue, le déséquilibre massique du rotor constitue également une origine annexe des vibrations axiales V1P. Toutefois, proportionnellement au déséquilibre aérodynamique du rotor, le déséquilibre massique du rotor représente une partie moindre de l'intensité des vibrations V1P axiales.

A l'inverse, la principale origine des vibrations transversales V1P est le déséquilibre massique du rotor, le déséquilibre aérodynamique du rotor constituant une origine annexe des vibrations transversales V1P. Toutefois, proportionnellement au déséquilibre massique du rotor, le déséquilibre aérodynamique du rotor représente une partie moindre de l'intensité des vibrations V1P transversales.

Dans ce contexte, pour un même nombre déterminé Nd de périodes de rotation Tr régulières, le module de calcul 13 réalise une opération de correction des valeurs globales des vibrations V1P axiales A et transversales μ l'une par rapport, à l'autre.

De préférence, les opérations de correction des valeurs globales des vibrations axiales A et transversales μ sont indépendantes.

A cet effet, le module de calcul 13 peut utiliser une fonction logistique qui permet de calculer un coefficient de correction de chaque valeur globale A, μ.

Dans l'exemple de la figure 7, est illustré graphiquement, sous la forme d'une courbe d'un coefficient de correction axial de la valeur globale A. Ici, le coefficient de correction axial est compris entre 0 et 1. En pratique, plus le coefficient de correction axial comporte une valeur proche de la valeur 1, plus la part des vibrations V1P transversales dans l'intensité des phénomènes vibratoires axiaux est faible.

Afin d'obtenir le coefficient de correction de la valeur globale A, le module de calcul 13 peut utiliser la fonction logistique ci-dessous :

$$facteur\ correctif\ axial\ (x) = \frac{1}{1 + e^{-k*(x-x_0)}}$$

où x = (valeur globale μ V1P transversales/valeur globale A V1P axiales), et c=0,25, k=1,1, $x_0$=2,5 peuvent être utilisées comme valeurs de coefficient pour un type d'éolienne déterminé.

Le module de calcul 13 détermine le déséquilibre aérodynamique du rotor en fonction du produit de la valeur globale A des vibrations V1P axiales et du coefficient de correction axial.

Dans l'exemple de la figure 8, le déséquilibre aérodynamique est représenté graphiquement par une courbe dont la valeur varie entre 0 et 1. La valeur 0 correspondant à l'équilibre parfait du rotor, alors que la valeur 1 correspond à un déséquilibre maximal théorique qui ne peut être atteint. En pratique, lorsque le système de diagnostic 8 détermine un déséquilibre aérodynamique qui est supérieur à une valeur comprise entre 0,2 et 0,3, il est conseillé d'intervenir sur l'éolienne en question afin d'éviter tout dommage au niveau des pales ou du rotor,

Afin de déterminer le déséquilibre aérodynamique du rotor, le module de calcul 13 utilise une fonction logistique :

$$diagnostic\ déséquilibre\ aérodynamique\ (x) = \frac{1}{1 + e^{-k*(x-x_0)}}$$

où x = valeur globale A V1P axiale * facteur correctif axial (valeur_globale_transverse_V1P/valeur_globale_axial_V1P), et k=0.9, $x_0$=2,75 qui peuvent être utilisées comme valeurs de coefficient pour un type d'éolienne déterminé.

Ici, les valeurs axiales et transversales V1p sont exprimées en mg (miling), le milig étant une unité d'accélération.

De la même manière, le module de calcul 13 détermine un coefficient de correction transversal de la valeur globale μ par exemple à l'aide d'une fonction logistique de même type que celle décrite pour le coefficient de correction axial :

$$facteur\ correctif\ transverse\ (x) = \frac{1}{1 + e^{-k*(x-x_0)}}$$

où x = (valeur globale A V1P axiales/valeur globale μ V1P transversales), et c=0,2, k=1,1, $x_0$=1.75 qui peuvent être utilisées comme valeurs de coefficient pour un type d'éolienne déterminé.

D'un point de vue graphique, le facteur correctif transversal présente un profil de courbe similaire à celui du facteur correctif axial qui est illustré à la figure 7.

De manière similaire, plus le coefficient de correction transversal comporte une valeur proche la valeur 1, plus la part des vibrations V1P axiales dans l'intensité des phénomènes vibratoires transversaux est faible.

Le module de calcul 13 détermine le déséquilibre massique en fonction du produit du coefficient de correction transversal et de la valeur globale des vibrations V1P transversales, La détermination du déséquilibre massique du rotor est effectuée au travers d'une fonction logistique de même type que celle utilisés pour déterminer le déséquilibre aérodynamique :

$$diagnostic\ déséquilibre\ de\ masse\ (x) = \frac{1}{1 + e^{-k*(x-x_0)}}$$

où $\times$ = valeur globale $\mu$ V1P transversale * facteur correctif transversale globale axiale V1P / valeur globals_transverse_V1P), et k=0,7, $x_0$=2.25 qui peuvent être utilisées comme valeurs de coefficients pour un modèle d'éolienne déterminé.

Le déséquilibre massique du rotor peut également, être exprimé selon une échelle de 0 à 1 selon une interprétation similaire au déséquilibre aérodynamique du rotor, A savoir, que la valeur 0 correspond à l'équilibre parfait du rotor, alors que la valeur 1 correspond à un déséquilibre maximal théorique qui ne peut être atteint,

D'un point de vue graphique, le déséquilibre massique du rotor présente un profil de courbe similaire à celui du déséquilibre aérodynamique qui est illustré à la figure 8.

En pratique, lorsque que le système de diagnostic détermine un déséquilibre massique qui est supérieur à des valeurs comprises entre 0,2 et 0,3, il est également conseillé d'intervenir sur l'éolienne en question afin d'éviter tout dommage au niveau des pales et/ou du rotor.

Le système de diagnostic 1 fonctionne en continu et permet de transmettre des données en continu et en temps réel aux exploitants des parcs d'éoliennes.

Le système de diagnostic 1 permet de déterminer, au travers d'un procédé de diagnostic, le déséquilibre aérodynamique et massique du rotor sans intervenir dans le fonctionnement normal de l'éolienne, En d'autres termes, le déséquilibre aérodynamique et massique du rotor est déterminé sans intervenir sur les réglages de fonctionnement de l'éolienne. Ainsi, à titre indicatif, le système et le procédé de diagnostic ne nécessitent pas de modifier l'angle de tangage du rotor pour déterminer le déséquilibre rotor,

Au regard des informations que reçoivent les exploitants des parcs d'éoliennes , ils peuvent optimiser la gestion de leurs parcs éoliens. Le système de diagnostic permet notamment, d'orienter les exploitants des parcs dans leurs démarches d'entretien du parc éolien en identifiant les éoliennes qui présentent un déséquilibre rotor.

**Revendications**

1. Système de diagnostic (1) d'un déséquilibre rotor d'une éolienne à partir de données d'accélération mesurées au niveau d'une nacelle de l'éolienne qui est supportée par une tour, **caractérisé en ce qu'**il comporte :

   - un dispositif de mesure (7) équipé d'un capteur de vibration trois axes (X, Y, Z) qui effectue des mesures systématiques et continues des données d'accélération correspondant aux phénomènes vibratoires se produisant au niveau de la nacelle ; et
   - un système de traitement (8) des données d'accélération adapté à déterminer le déséquilibre du rotor au travers d'une analyse vibratoire qui se base uniquement sur les données d'accélération mesurées sur au moins deux axes (X, Y, Z) au niveau de la nacelle sans intervenir sur le fonctionnement normal de l'éolienne.

2. Système de diagnostic (1) selon la revendication 1, **caractérisé en ce que** le système de traitement (8) comprend un module d'analyse (9) qui analyse en continue des données d'accélération mesurées par le dispositif de mesure (7) afin de déterminer une période de fonctionnement (Tf) stable de l'éolienne, le déséquilibre rotor étant déterminé au cours d'une pluralité de périodes de fonctionnement (Tf) stable de l'éolienne qui sont définies par une fréquence (3P) stable de passage des pales devant la tour.

3. Système de diagnostic (1) selon la revendication 2, **caractérisé en ce que** le module d'analyse (9) détermine une période de fonctionnement (Tf) lorsqu'il identifie des vibrations (V3P) dues au passage d'une pale devant la tour selon au moins un axe (X, Y, Z).

4. Système de diagnostic (1) selon la revendication 3, **caractérisé en ce que** le module d'analyse (9) identifie les vibrations (V3P) après une opération de raffinage des données d'accélération mesurées, l'opération de raffinage comportant :

   - une étape de projection des données d'accélération collectées dans un repère tridimensionnel (X", Y", Z") du rotor ;
   - une étape de formation d'un spectre fréquentiel des données d'accélération projetées dans le repère tridimensionnel (X", Y", Z") du rotor ;
   - une étape de suréchantilonage du spectre fréquentiel ; et
   - une étape de sélection de pics correspondant aux vibrations (V3P) qui est réalisée par le produit de chaque pic du spectre fréquentiel suréchantillonné avec le pic d'au moins les cinq premières harmoniques dudit pic.

5. Système de diagnostic (1) selon l'une des revendications 2 à 4, **caractérisé en ce que** le système de traitement

(8) comporte un module de périodicité (11) qui est adapté à déterminer et enregistrer une période de rotation (Tr) régulière du rotor qui correspond à une pluralité de périodes de fonctionnement (Tf) stable de l'éolienne.

6. Système de diagnostic (1) selon la revendication 5, **caractérisé en ce que** le module de périodicité (11) balaye les vibrations (V3P) identifiées au cours d'une période de fonctionnement (Tf) de manière à détecter au moins une vibration (V3P) dont la fréquence est voisine d'une fréquence (3P) de référence de l'éolienne, lorsque que le module de périodicité (11) détecte au moins une vibration (V3P) dont la fréquence est voisine de la valeur de la fréquence (3P) théorique de l'éolienne, le module de périodicité (11) présélectionne la période de fonctionnement (Tf) .

7. Système de diagnostic (1) selon l'une des revendications 5 et 6, **caractérisé en ce que**, lorsque le module de périodicité (11) sélectionne un nombre seuil (NS) de périodes de fonctionnement (Tf) qui se succèdent chronologiquement, le module de périodicité (11) enregistre une période de rotation (Tr) régulière du rotor.

8. Système de diagnostic (1) selon l'une des revendications 2 à 7, **caractérisé en ce que** le système de traitement (8) comprend un module de traitement fréquentiel (12) adapté à quantifier selon au moins deux axes (X", Y", Z") des vibrations (V1P) de la nacelle dues à un déséquilibre du rotor au cours d'une pluralité de périodes de fonctionnement (Tf) stable de l'éolienne.

9. Système de diagnostic (1) selon la revendication 8, **caractérisé en ce que** le module de traitement fréquentiel (12) quantifie des vibrations (V1P) dont la fréquence est voisine d'une fréquence (1P) de référence de l'éolienne.

10. Système de diagnostic (1) selon l'une des revendications 8 et 9, **caractérisé en ce que** le système de traitement (8) comprend un module de calcul (13) adapté à déterminer le déséquilibre du rotor en fonction des vibrations (V1P) selon au moins deux axes (X", Y", Z") qui ont été quantifiées au cours d'une pluralité de périodes de fonctionnement (Tf) stable de l'éolienne.

11. Système de diagnostic (1) selon la revendication 10, **caractérisé en ce que** le module de calcul (13) détermine, en fonction des vibrations (V1P) quantifiées selon au moins deux axes (X", Y", Z"), un déséquilibre aérodynamique du rotor et un déséquilibre massique du rotor qui forment le déséquilibre rotor.

12. Système de diagnostic (1) selon l'une des revendications 10 et 11, **caractérisé en ce que** le module d'analyse (9), le module de périodicité (11), le module de traitement fréquentiel (12) et le module de calcul (13) sont des algorithmes adaptés à être exécutés par au moins un terminal informatique (10) .

13. Procédé de diagnostic d'un déséquilibre rotor d'une éolienne à partir de données d'accélération mesurées au niveau d'une nacelle d'éolienne qui est supportée par une tour, **caractérisé en ce qu'**il comporte :

   - une étape de mesure systématique et continue selon trois axes (X, Y, Z) de données d'accélération correspondant aux phénomènes vibratoires se produisant au niveau de la nacelle ; et
   - une étape de traitement des données d'accélération de manière à déterminer le déséquilibre du rotor au travers d'une analyse vibratoire qui se base uniquement les données d'accélération mesurées sur au moins deux axes (X, Y, Z) au niveau de la nacelle sans intervenir dans le fonctionnement normal de l'éolienne.

14. Procédé de diagnostic selon la revendication 13, **caractérisé en ce que** l'étape de traitement des données d'accélération comprend :

   - une opération d'analyse en continue des données d'accélération afin de déterminer une période de fonctionnement (Tf) stable de l'éolienne, et
   - une opération de détermination d'une pluralité de périodes de fonctionnement (Tf) stable de l'éolienne qui est définie par une fréquence (3P) stable de passage des pales devant la tour, le déséquilibre rotor étant déterminé au cours de cette pluralité de périodes de fonctionnement (Tf) stable de l'éolienne.

15. Procédé de diagnostic selon la revendication 14, **caractérisé en ce qu'**une période de fonctionnement (Tf) est déterminée lorsque des vibrations (V3P) dues au passage d'une pale devant la tour selon au moins un axe (X, Y, Z) sont identifiées.

**Patentansprüche**

1. System zum Diagnostizieren (1) einer Rotorunwucht einer Windkraftanlage aus Beschleunigungsdaten, die auf Höhe einer von einem Turm getragenen Gondel der Windkraftanlage gemessen werden, **dadurch gekennzeichnet, dass** es umfasst:

   - eine Messvorrichtung (7), die mit einem dreiachsigen Vibrationssensor (X, Y, Z) ausgestattet ist, der systematische und kontinuierliche Messungen der Beschleunigungsdaten durchführt, die den auf Höhe der Gondel auftretenden Vibrationsphänomenen entsprechen; und
   - ein Beschleunigungsdatenverarbeitungssystem (8), das geeignet ist, die Unwucht des Rotors durch eine Vibrationsanalyse zu bestimmen, die ausschließlich auf den Beschleunigungsdaten basiert, die an mindestens zwei Achsen (X, Y, Z) in Höhe der Gondel gemessen wurden, ohne den normalen Betrieb der Windkraftanlage zu beeinträchtigen.

2. Diagnosesystem (1) nach Anspruch 1, **dadurch gekennzeichnet, dass** das Verarbeitungssystem (8) ein Analysemodul (9) umfasst, das von der Messvorrichtung (7) gemessene Beschleunigungsdaten kontinuierlich analysiert, um eine stabile Betriebsperiode (Tf) der Windkraftanlage zu bestimmen, wobei die Rotorunwucht während einer Vielzahl stabiler Betriebsperioden (Tf) der Windkraftanlage bestimmt wird, die durch eine stabile Frequenz (3P) des Vorbeilaufens der Rotorblätter vor dem Turm definiert sind.

3. Diagnosesystem (1) nach Anspruch 2, **dadurch gekennzeichnet, dass** das Analysemodul (9) eine Betriebsperiode (Tf) bestimmt, wenn es Vibrationen (V3P) aufgrund des Vorbeilaufens eines Rotorblatts vor dem Turm entlang mindestens einer Achse erkennt (X, Y, Z).

4. Diagnosesystem (1) nach Anspruch 3, **dadurch gekennzeichnet, dass** das Analysemodul (9) die Vibrationen (V3P) nach einem Verfeinerungsvorgang der gemessenen Beschleunigungsdaten identifiziert, wobei der Verfeinerungsvorgang umfasst:

   - einen Schritt des Projizierens der gesammelten Beschleunigungsdaten in einen dreidimensionalen Koordinatensystem (X", Y", Z") des Rotors;
   - einen Schritt des Bildens eines Frequenzspektrums der Beschleunigungsdaten, die in das dreidimensionale Koordinatensystem (X", Y", Z") des Rotors projiziert werden;
   - einen Schritt des Überabtastens des Frequenzspektrums; und
   - einen Schritt zum Auswählen von den Vibrationen (V3P) entsprechenden Spitzen, der durch das Produkt jeder Spitze des überabgetasteten Frequenzspektrums mit der Spitze von mindestens den ersten fünf Harmonischen der Spitze ausgeführt wird.

5. Diagnosesystem (1) nach einem der Ansprüche 2 bis 4, **dadurch gekennzeichnet, dass** das Verarbeitungssystem (8) ein Periodizitätsmodul (11) umfasst, das geeignet ist, eine Periode regelmäßiger Rotation (Tr) des Rotors zu bestimmen und aufzuzeichnen, die einer Vielzahl stabiler Betriebsperioden (Tf) der Windkraftanlage entspricht.

6. Diagnosesystem (1) nach Anspruch 5, **dadurch gekennzeichnet, dass** das Periodizitätsmodul (11) die während einer Betriebsperiode (Tf) identifizierten Vibrationen (V3P) abtastet, um mindestens eine Vibration (V3P) zu erfassen, deren Frequenz nahe bei einer Referenzfrequenz (3P) der Windkraftanlage liegt; und dadurch, dass wenn das Periodizitätsmodul (11) mindestens eine Vibration (V3P) erfasst, deren Frequenz nahe dem Wert der theoretischen Frequenz (3P) der Windkraftanlage liegt, das Periodizitätsmodul (11) die Betriebsperiode (Tf) im Voraus auswählt.

7. Diagnosesystem (1) nach einem der Ansprüche 5 und 6, **dadurch gekennzeichnet, dass**, wenn das Periodizitätsmodul (11) eine Schwellenanzahl (NS) von zeitlich aufeinander folgenden Betriebsperioden (Tf) auswählt, das Periodizitätsmodul (11) eine Periode regelmäßiger Rotation (Tr) des Rotors aufzeichnet.

8. Diagnosesystem (1) nach einem der Ansprüche 2 bis 7, **dadurch gekennzeichnet, dass** das Verarbeitungssystem (8) ein Frequenzverarbeitungsmodul (12) umfasst, das geeignet ist, um entlang mindestens zweier Achsen (X", Y", Z") Vibrationen (V1P) der Gondel zu quantifizieren, die auf eine Unwucht des Rotors während einer Vielzahl stabiler Betriebsperioden (Tf) der Windkraftanlage zurückzuführen sind.

9. Diagnosesystem (1) nach Anspruch 8, **dadurch gekennzeichnet, dass** das Frequenzverarbeitungsmodul (12) Vibrationen (V1P) quantifiziert, deren Frequenz nahe einer Referenzfrequenz (1P) der Windkraftanlage liegt.

**10.** Diagnosesystem (1) nach einem der Ansprüche 8 und 9, **dadurch gekennzeichnet, dass** das Verarbeitungssystem (8) ein Berechnungsmodul (13) umfasst, das geeignet ist, die Unwucht des Rotors in Abhängigkeit von den Vibrationen (V1P) nach mindestens zwei Achsen (X", Y", Z") zu bestimmen, die während einer Vielzahl stabiler Betriebsperioden (Tf) der Windkraftanlage quantifiziert wurden.

**11.** Diagnosesystem (1) nach Anspruch 10, **dadurch gekennzeichnet, dass** das Berechnungsmodul (13) in Abhängigkeit von den entlang mindestens zwei Achsen (X", Y", Z") quantifizierten Vibrationen (V1P) eine aerodynamische Unwucht des Rotors und eine Massenunwucht des Rotors bestimmt, die die Rotorunwucht bilden.

**12.** Diagnosesystem (1) nach einem der Ansprüche 10 und 11, **dadurch gekennzeichnet, dass** das Analysemodul (9), das Periodizitätsmodul (11), das Frequenzverarbeitungsmodul (12) und das Berechnungsmodul (13) Algorithmen sind, die zum Ausführen durch mindestens ein Computerterminal (10) geeignet sind.

**13.** Verfahren zum Diagnostizieren einer Rotorunwucht einer Windkraftanlage aus Beschleunigungsdaten, die auf Höhe einer von einem Turm getragenen Gondel einer Windkraftanlage gemessen wurden, **dadurch gekennzeichnet, dass** es umfasst:

- einen Schritt der systematischen und kontinuierlichen Messung von Beschleunigungsdaten entlang dreier Achsen (X, Y, Z), die den Vibrationsphänomenen entsprechen, die auf Höhe der Gondel auftreten; und
- einen Schritt des Verarbeitens von Beschleunigungsdaten, um die Unwucht des Rotors durch eine Vibrationsanalyse zu bestimmen, die ausschließlich auf den Beschleunigungsdaten basiert, die an mindestens zwei Achsen (X, Y, Z) auf Höhe der Gondel gemessen wurden, ohne den normalen Betrieb der Windkraftanlage zu beeinträchtigen.

**14.** Diagnoseverfahren nach Anspruch 13, **dadurch gekennzeichnet, dass** der Schritt des Verarbeitens von Beschleunigungsdaten umfasst:

- einen Vorgang des kontinuierlichen Analysierens der Beschleunigungsdaten, um eine stabile Betriebsperiode (Tf) der Windkraftanlage zu bestimmen, und
- einen Vorgang zum Bestimmen einer Vielzahl stabiler Betriebsperioden (Tf) der Windkraftanlage, die durch eine stabile Frequenz (3P) des Vorbeilaufens der Rotorblätter vor dem Turm definiert ist, wobei die Rotorunwucht während dieser Vielzahl stabiler Betriebsperioden (Tf) der Windkraftanlage bestimmt wird.

**15.** Diagnoseverfahren nach Anspruch 14, **dadurch gekennzeichnet, dass** eine Betriebsperiode (Tf) bestimmt wird, wenn Vibrationen (V3P) aufgrund des Vorbeilaufens eines Rotorblatts vor dem Turm entlang mindestens einer Achse (X, Y, Z) identifiziert werden.

**Claims**

**1.** System for diagnosing (1) a rotor imbalance of a wind turbine on the basis of acceleration data measured in the region of a wind turbine nacelle which is supported by a tower, **characterized in that** said system comprises:

- a measuring device (7) provided with a three-axis (X, Y, Z) vibration sensor which performs systematic and continuous measurements of the acceleration data corresponding to the vibrations occurring in the region of the nacelle; and
- a system (8) for processing acceleration data, which system is suitable for determining the imbalance of the rotor by means of a vibration analysis which is based solely on the acceleration data measured on at least two axes (X, Y, Z) in the region of the nacelle without interfering with the normal operation of the wind turbine.

**2.** Diagnosis system (1) according to claim 1, **characterized in that** the processing system (8) comprises an analysis module (9) which continuously analyzes acceleration data measured by the measuring device (7) in order to determine a stable operating period (Tf) of the wind turbine, the rotor imbalance being determined during a plurality of stable operating periods (Tf) of the wind turbine which are defined by a stable frequency (3P) of the blades passing in front of the tower.

**3.** Diagnosis system (1) according to claim 2, **characterized in that** the analysis module (9) determines an operating period (Tf) when it identifies vibrations (V3P) due to a blade passing in front of the tower along at least one axis (X, Y, Z).

4. Diagnosis system (1) according to claim 3, **characterized in that** the analysis module (9) identifies the vibrations (V3P) after an operation of refining the measured acceleration data, the refining operation comprising:

   - a step of projecting the collected acceleration data into a three-dimensional frame of reference (X", Y", Z") of the rotor;
   - a step of forming a frequency spectrum of the acceleration data projected into the three-dimensional frame of reference (X", Y", Z") of the rotor;
   - a step of oversampling the frequency spectrum; and
   - a step of selecting peaks corresponding to the vibrations (V3P), which step is carried out using the product of each peak of the oversampled frequency spectrum with the peak of at least the first five harmonics of said peak.

5. Diagnosis system (1) according to any of claims 2 to 4, **characterized in that** the processing system (8) comprises a periodicity module (11) which is suitable for determining and recording a regular rotation period (Tr) of the rotor which corresponds to a plurality of stable operating periods (Tf) of the wind turbine.

6. Diagnosis system (1) according to claim 5, **characterized in that** the periodicity module (11) scans the vibrations (V3P) identified during an operating period (Tf) so as to detect at least one vibration (V3P) of which the frequency is close to a reference frequency (3P) of the wind turbine, and when the periodicity module (11) detects at least one vibration (V3P) of which the frequency is close to the value of the theoretical frequency (3P) of the wind turbine, the periodicity module (11) preselects the operating period (Tf).

7. Diagnosis system (1) according to either claim 5 or claim 6, **characterized in that**, when the periodicity module (11) selects a threshold number (NS) of operating periods (Tf) which follow one another chronologically, the periodicity module (11) records a regular rotation period (Tr) of the rotor.

8. Diagnosis system (1) according to any of claims 2 to 7, **characterized in that** the processing system (8) comprises a frequency processing module (12) suitable for quantifying, along at least two axes (X", Y", Z"), vibrations (V1P) of the nacelle due to an imbalance of the rotor during a plurality of stable operating periods (Tf) of the wind turbine.

9. Diagnosis system (1) according to claim 8, **characterized in that** the frequency processing module (12) quantifies vibrations (V1P) of which the frequency is close to a reference frequency (1P) of the wind turbine.

10. Diagnosis system (1) according to either claim 8 or claim 9, **characterized in that** the processing system (8) comprises a calculation module (13) which is suitable for determining the imbalance of the rotor on the basis of the vibrations (V1P) along at least two axes (X", Y", Z"), which vibrations have been quantified during a plurality of stable operating periods (Tf) of the wind turbine.

11. Diagnosis system (1) according to claim 10, **characterized in that** the calculation module (13) determines, on the basis of the vibrations (V1P) quantified along at least two axes (X", Y", Z"), an aerodynamic imbalance of the rotor and a mass imbalance of the rotor which form the rotor imbalance.

12. Diagnosis system (1) according to either claim 10 or claim 11, **characterized in that** the analysis module (9), the periodicity module (11), the frequency processing module (12) and the calculation module (13) are algorithms which are suitable for being executed by at least one computer terminal (10).

13. Method for diagnosing a rotor imbalance of a wind turbine on the basis of acceleration data measured in the region of a wind turbine nacelle which is supported by a tower, **characterized in that** said method comprises:

   - a step of systematically and continuously measuring acceleration data along three axes (X, Y, Z), which data correspond to the vibrations occurring in the region of the nacelle; and
   - a step of processing acceleration data so as to determine the imbalance of the rotor by means of a vibration analysis which is based only on the acceleration data measured on at least two axes (X, Y, Z) in the region of the nacelle without interfering in the normal operation of the wind turbine.

14. Diagnosis method according to claim 13, **characterized in that** the step of processing acceleration data comprises:

   - an operation for continuously analyzing the acceleration data in order to determine a stable operating period (Tf) of the wind turbine, and

- an operation for determining a plurality of stable operating periods (Tf) of the wind turbine, which is defined by a stable frequency (3P) of the blades passing in front of the tower, the rotor imbalance being determined during this plurality of stable operating periods (Tf) of the wind turbine.

15. Diagnosis method according to claim 14, **characterized in that** an operating period (Tf) is determined when vibrations (V3P) due to a blade passing in front of the tower along at least one axis (X, Y, Z) are identified.

Figure 1

Figure 9

Mesure phénomènes vibratoires

Identification des vibrations dues au passage d'une pale

Enregistrement d'une période de rotation régulière

Identification des vibrations dues à la rotation du rotor

Détermination du déséquilibre rotor

Figure 2

Figure 3

Figure 4

Figure 5

Figure 6

Figure 7

Figure 8

**EP 3 710 693 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120183399 A
- WO 2016169964 A
- WO 2009129617 A